# EUROPEAN PATENT SPECIFICATION

(11) **EP 1 524 902 B1**
(45) Date of publication and mention of the grant of the patent: **06.12.2006**
(21) Application number: 03740429.0
(22) Date of filing: 07.07.2003
(51) Int. Cl.: A01N 33/18, A01N 25/12, A01N 25/28

(54) **METHODS OF USING DINITROANILINE COMPOUNDS AS MICROCAPSULE FORMULATIONS**
METHODEN DER VERWENDUNG VON DINITROANILINVERBINDUNGEN ALS MIKROKAPSELFORMULIERUNGEN
PROCEDE D'UTILISATION DE COMPOSES DE DINITROANILINE SOUS FORME DE FORMULATIONS DE MICROCAPSULES

(30) Priority: 22.07.2002 US 397742 P
(43) Date of publication of application: 27.04.2005
(73) Proprietor: BASF Aktiengesellschaft, 67056 Ludwigshafen (DE); BASF CORPORATION, Mount Olive, New Jersey 07828-1234 (US)
(72) Inventor: SWEAT, Jonathan, Apex, NC 27523 (US); DEXTER, Robin, Yardley, PA 19067 (US)
(74) Representative: Cimniak, Thomas
(86) International application number: PCT/EP2003/007254
(87) International publication number: WO 2004/008852

(56) References cited:
- EP-A- 0 380 325
- EP-A- 0 953 285
- US-A- 4 938 797

## Description

### Field of the Invention

The present invention relates to new herbicidal methods of use for dinitroaniline compounds, in particular, the present invention relates to herbicidal methods for dinitroaniline compounds formulated as microcapsules.

### Background of the Invention

The commercial emulsifiable concentrate formulations of certain herbicides are offen mixed with water and applied to the soll surface. Application to a dry soll surface that remains dry for 10 to 14 days without rainfall or irrigation may lead to a dramatic reduction in weed control. This reduced efficacy is believed to be due to volatilization and photodegradation of the active ingredient. In addition, recent trends in tillage methods ("no-till") result in the accretion of large amounts of plant materials on the surface of the soll. These are mainly cellulosic materials comprising dead stalks and leaves from the previous harvest, generally called "trash". In no-till conditions the herbicide is applied over the trash. Certain formulations of herbicides, notably EC formulations are absorbed by the trash. When this occurs, a reduced amount of herbicide reaches the soll which is the intended target. As a result the herbicide may not be present in the soll in herbicidal amounts or to control weed growth. This absorption of herbicide is not fully released even after rainfall.

Traditionally dinitroanilines that are formulated as emulsifiable concentrates can increase phytotoxicity caused by the herbicide or by the tank mix partners used. When dinitroanilines are applied after the crop has emerged (postemergence), there is frequently considerable damage to the crop. EC formulations are especially noted for crop damage post emergence.

EP0953285 discloses herbicidal mixtures comprising azafenidin and at least one dinitroaniline herbicide selected from pendimethalin, dinitramine, ethalfluralin, and trifluralin.

EP0380325 and US4938797 relate to the microencapsulation of pesticides such as trifluralin.

As such, a need exists for controlling weeds in dry weather conditions by minimizing volatilization and/or photodegradation. In addition, there is a need for a formulation which can be applied post emergence without causing crop damage. There is a need for formulations which are not absorbed by trash, so as to provide better weed control.

### Summary of the Invention

As embodied and broadly described herein, this invention, in one aspect, relates to a method of inhibiting the growth of an undesired plant by application of a herbicidally effective amount of a microcapsule composition. The application may be pre-plant incorporated, pre-emergence, pre-transplanting or early post-emergence. The microcapsule composition includes a dinitroaniline compound and the microcapsule has a median diameter from about 3 micrometers to about 10 micrometers.

In addition, the invention relates to a method of inhibiting the growth of an undesired plant by contacting the plant with a herbicidally effective amount of a microcapsule composition wherein the microcapsules contain a dinitroaniline compound and the microcapsule has a wall with a thickness from about 1 % to about 10 %.

In particular, the invention relates to a method for the preemergence control of undesirable plant species comprising applying as a tank mix to soil containing seeds of the undesirable plant a herbicidally effective amount of a microcapsule composition comprising a dinitroaniline compound, with a herbicide formulation comprising diflufenzopyr or dicamba or diflufenzopyr and dicamba.

Another aspect of the invention is directed to a method for the control of undesirable plants in the presence of desirable crop plants which comprises applying to soil containing the desirable plants and seeds of the undesirable plant a herbicidally effective amount of a microcapsule composition comprising a dinitroaniline compound.

In a further aspect, the invention provides method for safening a desirable crop from the effects of a herbicide applied to control undesirable plants in the presence of the desirable crop plants which comprises applying a herbicidally effective amount of a microcapsule composition comprising a dinitroaniline compound.

The method of the invention decreases the volatilization of the active ingredient as compared to standard formulations. It also provides for decreased photodegradation of the active ingredients. In addition, the method of the instant invention provides for increased safety of the crop being protected either by mitigating damage from a tank mix partner or by minimizing the effect of the herbicide an the crop being affected. Microcapsule formulations of this invention show a safening effect, i.e. much less damage to a variety of crops compared with EC formulations, when applied post-emergence. Finally, microcapsule formulations of this invention are absorbed into trash to a much smaller extent than EC formulations, and are more effective in weed control under no-till field conditions.

Advantages of the invention will be set forth in part in the description which follows, and in part will be obvious from the description, or may be learned by practice of the invention. It is to be understood that both the foregoing general description and the following detailed description are exemplary and explanatory only and are not restrictive of the invention, as claimed.

### Detailed Description

The present invention may be understood more readily by reference to the following detailed description of exemplary embodiments of the invention and the examples included therein.

In this specification and in the claims that follow, reference will be made to a number of terms that shall be defined to have the following meanings:

As used throughout, the term "contacting" is used to mean at least an instance of exposure of at least one plant cell to the present composition by applying the microcapsule composition using any method known in the art.

In general, "herbicidally effective amount" means the amount needed to achieve an observable herbicidal effect an plant growth, including the effects of plant necrosis, plant death, growth inhibition, reproduction inhibition, inhibition of proliferation, and removal, destruction, or otherwise diminishing the occurrence and activity of a plant. One of ordinary skill in the art will recognize that the potency and, therefore, a "herbicidally effective amount," can vary for the various compositions used in the invention.

The term "plant" as used herein means terrestrial plants and aquatic plants. Inclusive of terrestrial plants are germinating seeds, emerging seedlings and herbaceous vegetation including the roots and above-ground portions, as well as established woody plants. Inclusive of aquatic plants are algae, vegetative organisms free-floating and immersed species that are normally rooted in soil. A non-exhaustive list of plants includes the following genera without restriction: Abutilon, Amaranthus, Artemisia, Asclepias, Avena, Axonopus, Borreria, Brachiaria, Brassica, Bromus, Chenopodium, Cirsium, Commelina, Convolvulus, Cynodon, Cyperus, Digitaria, Echinochloa, Eleusine, Elymus, Equisetum, Erodium, Helianthus, Imperata, Ipomoea, Kochia, Lolium, Malva, Oryza, Ottochloa, Panicum, Paspalum, Phalaris, Phragmites, Polygonum, Portulaca, Pteridium, Pueraria, Rubus, Salsola, Setaria, Sida, Sinapis, Sorghum, Triticum, Typha, Ulex, Xanthium and Zea.

Broadleaf species are exemplified without limitation by the following: velvetleaf (Abutilon theophrasti), pigweed (Amaranthus spp.), mugwort (Artemisia spp.), milkweed (Asclepias spp.), buttonweed (Borreria spp.), oilseed rape, canola, indian mustard, etc. (Brassica spp.), canada thistle (Cirsium arvense), commelina (Commelina spp.), field bindweed (Convolvulus arvensis), filaree (Erodium spp.), sunflower (Helianthus spp.), morning glory (Ipomoea spp.), kochia (Kochia scoparia), mallow (Malva spp.), wild buckwheat, smartweed, etc. (Polygonum spp.), purslane (Portulaca spp.), kudzu (Pueraria spp.), russian thistle (Salsola spp.), sida (Sida spp.), wild mustard (Sinapis arvensis) and cocklebur (Xanthium spp.).

Grass species are exemplified without limitation by the following: wild oat (Avena fatua), carpetgrass (Axonopus spp.), brachiaria (Brachiaria spp.), downy brome (Bromus tectorum), bermuda grass (Cynodon dactylon), yellow nutsedge (Cyperus esculentus), purple nutsedge (C. rotundus), crabgrass (Digitaria spp.), barnyard grass (Echinochloa crus-galli), goosegrass (Eleusine indica), quackgrass (Elymus repens), lalang (Imperata cylindrica), annual ryegrass (Lolium multiflorum), perennial ryegrass (Lolium perenne), rice (Oryza sativa), ottochloa (Ottochloa nodosa), guineagrass (Panicum maximum), dallisgrass (Paspalum dilatatum), bahiagrass (Paspalum notatum), canarygrass (Phalaris spp.), reed (Phragmites spp.), foxtail (Setaria spp.), johnsongrass (Sorghum halepense), wheat (Triticum aestivum), cattail (Typha spp.), and corn (Zea mays).

Other plant species are exemplified without limitation by the following: horsetail (Equisetum spp.), bracken (Pteridium aquilinum), blackberry (Rubus spp.) and gorse (Ulex europaeus).

The microcapsules of the present invention may be formed by any process known in the art. U.S. Patent Nos. 5,705,174 and 5,910,314 both to Benoff et al., describe suitable microcapsule formulations.

The microcapsules include a salt water-immiscible material within a shell wall of a polycondensate suspended in an aqueous salt solution. One exemplary process for making the microcapsules includes: providing an aqueous solution containing a salt or mixture of salts and an emulsifier or mixture of emulsifiers; dispersing, with agitation, in the aqueous solution, a salt water-immiscible solution containing a first reactive component required to form the shell wall and the salt water-immiscible material to form a dispersion; and adding, with agitation, to the dispersion, a second reactive component required to form the shell wall which reacts with the first reactive component to form the polycondensate shell wall about the satt water-immiscible material.

The stability of the microcapsule compositions of this invention is achieved in part through the use of a salt or mixture of salts in the process used to prepare the compositions. The satt or mixture of salts decreases the aqueous solubility of the material to be encapsulated and, thereby, reduces the amount of non-encapsulated material present in the microcapsule compositions of the present invention. This process provides microcapsule compositions which may contain high concentrations of salt water-immiscible materials.

Salts suitable for use in the process of the present invention include alkali metal salts such as lithium chloride, sodium chloride, potassium chloride, lithium nitrate, sodium nitrate, potassium nitrate, lithium sulfate, sodium sulfate, potassium sulfate, sodium monohydrogen phosphate, potassium monohydrogen phosphate, sodium dihydrogen phosphate, potassium dihydrogen phosphate and the like; alkaline earth metal salts such as magnesium chloride, calcium chloride, magnesium nitrate, calcium nitrate, magnesium sulfate and the like; and ammonium salts such as ammonium chloride, ammonium sulfate, ammonium monohydrogen phosphate, ammonium dihydrogen phosphate and the like. Preferred salts for use in this invention include sodium chloride, potassium chloride, calcium chloride and magnesium sulfate, with magnesium Sulfate being especially preferred.

The microcapsule compositions may be prepared using a wide variety of emulsifiers. In particular, emulsifiers such as ethoxylated lignosulfonic acid salts, lignosulfonic acid salts, oxidized lignins, lignin salts, salts of styrene-maleic anhydride copolymers, salts of partial esters of styrene-maleic anhydride copolymers, partial salts of polyacrylic acid, partial salts of polyacrylic acid terpolymers and the like are suitable for use in the process of this invention. In the above described emulsifiers, sodium, potassium, magnesium, calcium and ammonium salts are generally preferred with sodium and magnesium salts being particularly preferred. Preferred emulsifiers for use in this invention include ethoxylated lignosulfonic acid salts, lignosulfonic acid salts and oxidized lignins, with lignosulfonic acid salts being more preferred, and the sodium salt of lignosulfonic acid being most preferred.

The aqueous solution of the present invention preferably contains about 5% to 30%, more preferably about 15% to 30%, by weight of the salt or mixture of salts, depending an the type of salt. With an especially high molecular weight salts, the weight percentage will be higher, possibly up to about 40%. With less than 5% salt the benefits of the present invention are less apparent and with greater than 30% (or 40%) the risk of an oversaturated solution is increased. The aqueous solution also contains preferably about 0.5% to 5%, more preferably about 1 % to 3%, by weight of the emulsifier or mixture of emulsifiers.

The present application pertains, in particular, to microcapsules that include at least one dinitroaniline compound. Exemplary dinitroaniline compounds include pendimethalin, trifluralin, ethalfluralin, butralin and benfluralin. The microcapsule compositions of the present invention preferably include about 5% to 60%, more preferably about 20% to 50%, by weight of the dinitroaniline compound.

The salt water-immiscible solution is prepared by mixing the first reactive wall forming component with the dinitroaniline compound at a temperature above the melting point of the dinitroaniline compound. Alternatively, the salt water-immiscible solution may be prepared by mixing the first reactive wall forming component with a solution of the dinitroaniline compound in a suitable salt water-immiscible solvent.

Salt water-immiscible solvents which are suitable for use include solvents which do not react undesirably with any of the ingredients used in the invention process. Suitable solvents include salt water-immiscible hydrocarbons, aromatic hydrocarbons, chlorinated hydrocarbons, chlorinated aromatic hydrocarbons, ketones, long chain esters and mixtures thereof.

The polycondensate shell wall of the present invention may be any known shell wall material and is preferably a polyurea, a polyurethane, a polyamide, a polycarbonate or a polysulfonamide, with a polyurea shell wall being especially preferred. The polycondensate shell wall may be prepared from reactive components which are well known in the art. Preferably, the polycondensate shell wall is prepared by reacting a first reactive component selected from the group consisting of a polyisocyanate, a polyacid chloride, a polychloroformate and a polysulfonyl chloride with a complementary second reactive component selected from the group consisting of a polyamine and polyol to form the appropriate polycondensate shell wall. In a preferred process of the present invention, a polyisocyanate is reacted with a polyamine to form a polyurea shell wall.

Polyisocyanates which are suitable for use include di- and triisocyanates wherein the isocyanate groups are attached to an aliphatic or aromatic group. Suitable polyisocyanates include tetramethylene diisocyanate, pentamethylene diisocyanate, hexamethylene diisocyanate, toluene diisocyanate, diphenylmethene-4,4'-diisocyanate, polymethylene polyphenylene isocyanate, 2,4,4'-diphenyl ether triisocyanate, 3,3'-dimethyl-4,4'-diphenyl diisocyanate, 3,3'-dimethoxy-4,4'-diphenyl diisocyanate, 1,5-naphthylene diisocyanate, 4,4'4"-triphenylmethane triisocyanate, the reaction product of tetramethylxylene diisocyanate and trimethylol propane, and the like with polymethylene polyphenylene isocyanate being preferred.

Polyamines suitable for use in the process of the present invention include ethylenediamine, propylene-1,3-diamine, tetramethylenediamine, pentamethylenediamine, 1,6-hexamethylenediamine, diethylenetriamine, triethylenetetramine, tetraethylenepentamine, pentaethylenehexamine, 4,9-dioxadodecane-1, 12-diamine, 1,3-phenylenediamine, 2,4- and 2,6-toluenediamine, 4,4'-diaminodiphenylmethane and the like with 1,6-hexamethylenediamine being preferred. Hydrochloride salts of those polyamines may also be used in the process of the present invention.

The satt water-immiscible solution preferably contains about 1% to 15%, more preferably about 2% to 8%, by weight of the first reactive wall forming component. The second reactive wall forming component is preferably present in an amount of about 0.3% to 5%, more preferably about 0.6% to 3%, by weight relative to that of the salt water-immiscible solution.

Various shell wall thicknesses may be utilized in the present invention. In particular, for use with dinitroaniline compounds, the preferred wall thickness is from about 1% to about 10%. Even more preferably, the wall thickness is from about 2% to about 5%. This amount is defined as the sum of the first reactive wall forming component amount plus the second wall forming amount divided by the sum of the dinitroaniline compound amount plus the first and second reactive wall forming component amounts times 100.

The process of making the microcapsules is generally conducted at an elevated temperature to increase the solubility of the salt, to maintain the salt water-immiscible material in a liquid state, and to enhance the wall forming reaction rate. This process is preferably conducted at a temperature of about 35°C to 85°C and is more preferably conducted at a temperature of about 50°C to 70°C.

The microcapsules prepared by the process of this invention preferably have a median diameter of about 3 micrometers to 50 micrometers and more preferably about 3 micrometers to 10 micrometers.

Other optional ingredients include agronomically acceptable inert solid or liquid carriers, anti-settling agents, salts, antifoams, surfactants, pH-adjusters, anti-freeze agents and the like may be added to the microcapsule compositions.

In particular, the present invention provides concentrated microcapsule herbicidal compositions which comprise about 10% to 70%, preferably about 30% to 50%, by weight of a dinitroaniline compound; about 30% to 90%, preferably about 50% to 70%, by weight of an aqueous solution which contains about 0.01 % to 0.05% by weight of a anti-settling agent, and up to about 0.5% by weight of an antifoam.

If desired, the microcapsules may be separated out of the microcapsule compositions prepared by the process of the present invention by methods known in the art such as filtration or spray drying to obtain storage-stable flowable powders.

When operating in accordance with the present invention, the growth of an undesired plant may inhibited or controlled by contacting the plant with a herbicidally effective amount of the composition of the present invention. The application of such herbicidal compositions to terrestrial plants can be carried out by conventional methods, e.g. boom and hand sprayers and aerial sprayers. The compositions can also be applied from airplanes as an aerial spray because of their effectiveness at low dosages.

The application of a herbicidally effective amount of the compositions of this invention to the target plant is dependent upon the response desired in the plant as well as such other factors as the plant species and stage of development thereof and the amount of rainfall. In foliar treatment for the control of terrestrial plants, the active ingredients are desirably applied in amounts from about 1,12·10⁻⁴ (0.01) to about 22,42·10⁻² (20) or more kg per are (pounds per acre). In applications for the control of aquatic plants, the active ingredients are desirably applied in amounts of from about 0.01 parts per million to about 1000 parts per million, based on the aquatic medium. The compounds of the present compositions may be readily synthesized using techniques generally known to synthetic organic chemists.

### Experimental

The following examples are put forth so as to provide those of ordinary skill in the art with a complete disclosure and description of how the components, compositions, articles, devices, and/or methods claimed herein are made and evaluated, and are intended to be purely exemplary of the invention and are not intended to limit the scope of what the inventors regard as their invention. Efforts have been made to ensure accuracy with respect to numbers (e.g., amounts, temperature, etc.) but some errors and deviations should be accounted for. Unless indicated otherwise, percent is percent by weight given the component and the total weight of the composition, temperature is in °C or is at ambient temperature, and pressure is at or near atmospheric. Emulsifiable concentrates, known formulations, are identified as "EC". Formulations of the invention are identified as "CS".

### Example 1

Pendimethalin CS and Trifluralin CS were prepared essentially according to the procedure set forth in US patent 5705174. The formulation contained the following components where the figures are % w/w of each component:

| **Component** | **Trifluralin CS** | **Pendimethalin CS** |
|---|---|---|
| Active Ingredient | 43.52 | 38.72 |
| | (96%pure) | (100%pure) |
| Reax 88B 15% solution (Na | 5.28 | -- |
| lignosulfonate, emulsifier | | |
| Diwatex 200 15%solution | -- | 6.66 |
| THIND 30 AF antifoam | 0.04 | 0.052 |
| Magnesium sulfate heptahydrate | 17.05 | 18.24 |
| Water | qs100 | qs100 |
| Mondur MRS poly phenyl | 1.04 | 1.32 |
| polymethyl isocyanate | | |
| Hexamethylene diamine (HMDA) | 1.45 | 1.84 |
| 25% solution | | |
| Kelzan S 2% solution | 3.15 | 2.00 |

### Example 2

Two trays were prepared with soil containing 3.2% organic material, pH of 4.8, cation exchange capacity (CEC) (meq/100gms) of 25.2, 20% sand, 60% silt, and 20% clay, silt loam. The two trays were treated with pendimethalin, at a rate of 1,12·10⁻² kg/are (1.0 lb per acre) of the active ingredient and 1,87 ℓ of carrier per are (20 gallons of carrier per acre)- one tray with pendimethalin CS (4% wall thickness) and one tray with pendimethalin EC. Crabgrass (digitaria spp.) seed was uniformly spread over each tray and covered with a very thin layer of soil prior to treating. The trays were not watered for 14 days. Six weeks after treatment, the tray treated with pendimethalin CS had 95% crabgrass control and the tray treated with pendimethalin EC had 70% crabgrass control. This example illustrates the volatilization of the EC formulation and the relative stability of the microcapsule formulation on the soil surface. The residual amount of herbicide is greater for the microcapsules and has a greater herbicidal effect than the EC formulation.

### Example 3

Diluted formulations of Pendimethalin CS (4% wall thickness, capsule diameter 7.0 microns) and Pendimethalin EC and Trifluralin CS (3.1% wall thickness, capsule diameter 10.0 microns) and Trifluralin EC were applied to glass fiber filter papers and placed in an oven in forced draft at 45°C. At intervals of days, the papers were removed and the residual active ingredient assayed as shown in Table 1 where it can be seen that the microcapsule formulations of dinitroanilines of this invention lose less herbicide by volatilization than the EC formulations.

**Table 1: Results of Volatilization Testing**

| | Percentage of Active Ingredient Remaining | | | |
|---|---|---|---|---|
| Day | Pendimethalin CS | Pendimethalin EC | Trifluralin CS | Trifluralin EC |
| 0 | 100 | 100 | 100 | 100 |
| 1 | 91.3 | 43.9 | 100 | 0 |
| 3 | 84.3 | 14.1 | 96.0 | 0 |

### Example 4

Pendimethalin CS (4% wall thickness, microcapsule size = 7.0 microns, median diameter) and pendimethalin EC formulations were applied to segregated corn trash (leaf, stalk, pith) dropwise and allowed to absorb for 15 minutes. Then the pieces of trash were placed in water and shaken until all removable pendimethalin was rinsed out. The concentration of pendimethalin in the rinsate was then assayed, as a percentage of the amount added. The results are set forth in Table 2 and show that the amounts of pendimethalin removable from corn trash are greater when formulated as microcapsules of the invention.

**Table 2: Results of Availability Testing**

| | Percentage of Removable Pendimethalin | |
|---|---|---|
| Com Trash | Pendimethalin CS | Pendimethalin EC |
| Leaf | 98.5 | 25.0 |
| Stalk | 45.6 | 38.8 |
| Pith | 83.8 | 57.4 |

### Example 5

A mixed grass/alfalfa field contained 10,16 cm (4-inch) alfalfa, 10,16 cm (4-inch) Orchard grass and 6,35 cm (2.5-inch) reed canary grass. Pendimethalin CS and Pendimethalin EC were applied to separate portions of the field. One month after the application, a 3,05 m (ten-foot) by 0,762 m (2.5-foot) section of each plot was cut with a sickle bar mower and the alfalfa and grass component were separated and weighed. The results are set forth in Table 3 where it can be seen that at higher application rates The microcapsule formulation increases the desirable alfalfa yield relative to the EC formulation.

**Table 3: Results of Safety Testing-Alfalfa**

| Formulation | Rate kg ai/are (lb ai/acre) | % Grass reduction (visual) |
|---|---|---|
| EC | 2,24·10⁻² (2.0) | 0 |
| CS | 2,24·10⁻² (2.0) | 0 |
| EC | 2,24·10⁻² (3.0) | 28.3 |
| CS | 3,36·10⁻² (3.0) | 5.0 |
| EC | 4,48·10⁻² (4.0) | 35.0 |
| CS | 4,48·10⁻² (4.0) | 5.0 |

### Example 6

In a greenhouse test, lettuce seeds (Waldmann's Dark Green M.I.) were planted and treated with pendimethalin EC or pendimethalin CS at the rate of 8,41·10⁻³ kg ai/are (0.75 lb al/A). The germinated lettuce was observed at 11 and 14 days after treatment. In both cases the microcapsule formulation caused less damage to lettuce than the EC formulation. The results are set forth in Table 4.

**Table 4: Results of Safety Testing-Lettuce Preemergent**

| Pendimethalin | 11 Days after Treatment | | | 14 Days after Treatment | | |
|---|---|---|---|---|---|---|
| Formulation | %Stunt | %Chlor | % Necrosis | %Stunt | %Chlor | % Necrosis |
| EC | 70.0 | 0.0 | 0.0 | 95.0 | 50.0 | 0.0 |
| CS | 0.0 | 0.0 | 0.0 | 0.0 | 0.0 | 0.0 |

### Example 7

In a greenhouse test, lettuce plants (Waldmann's Dark Green M.I.) at the 2-4 leaf stage of growth were treated with pendimethalin EC or pendimethalin CS at the rates of 8,41·10⁻³ (0.75) and 16,81·10⁻³ kg ai/are (1.5 lb al/A). The lettuce was observed at 7 and 14 days after treatment At both application rates the microcapsule formulation caused less damage to lettuce than the EC formulation. The results are set forth in Table 5.

**Table 5: Results of Safety Testing-Lettuce Post emergent**

| Pendimethalin | 7 Days after Treatment | | | 14 Days after Treatment | | |
|---|---|---|---|---|---|---|
| Formulation | %Stunt | %Chlor | % Necrosis | %Stunt | %Chlor | % Necrosis |
| EC 8,41·10⁻³ kg ai/are (0.75 lb ai/A) | 50.0 | 10.0 | 10.0 | 50.0 | 40.0 | 40.0 |
| CS 8,41·10⁻³ kg ai/are (0.75 lb ai/A) | 0.0 | 0.0 | 0.0 | 0.0 | 20.0 | 10.0 |
| EC 16,81·10⁻³ kg ai/are (1.5 lb ai/A) | 50.0 | 10.0 | 10.0 | 50.0 | 50.0 | 40.0 |
| CS 16,81·10⁻³ ai/are (1.5 lb ai/A) | 20.0 | 0.0 | 0.0 | 0.0 | 20.0 | 10.0 |

### Example 8

In a greenhouse test, tomato plants (Celebrity) 5-6" were treated with pendimethalin EC or pendimethalin CS at the rates of 8,41·10⁻³ and 16,81·10⁻³ kg ai/are (0.75 and 1.5 lb ai/A). The tomato 14 plants were observed at 8 and 11 days after treatment. At both application rates the microcapsule formulation caused less damage to tomatoes than the EC formulation. The results are set forth in Table 6.

**Table 6: Results of Safety Testing-Tomato Post emergent**

| Pendimethalin | 8 Days after Treatment | | | 11 Days after Treatment | | |
|---|---|---|---|---|---|---|
| Formulation | %Stunt | %Chlor | % Necrosis | %Stunt | %Chlor | % Necrosis |
| EC 8,41·10⁻³ kg ai/are (0.75 lb ai/A) | 40.0 | 16.7 | 3.3 | 36.7 | 13.3 | 3.3 |
| ME 8,41·10⁻³ kg ai/are (0.75 lb ai/A) | 3.3 | 10.0 | 0.0 | 3.3 | 10.0 | 0.0 |
| EC 16,81·10⁻³ kg ai/are (1.5 lb ai/A) | 60.0 | 26.7 | 13.3 | 50.0 | 30.0 | 13.3 |
| ME 16,81·10⁻³ kg ai/are (1.5 lb ai/A) | 23.3 | 20.0 | 0.0 | 26.7 | 16.7 | 0.0 |

### Example 9

Distinct^{®} herbicide, a mixture of diflufenzopyr and dicamba-sodium, was tank-mixed with pendimethalin CS and pendimethalin EC and applied to V3 and V6 stage of corn. The treatments were as follows:

| | | |
|---|---|---|
| A | Distinct, 8,41·10⁻³ kg/are (12 oz/acre) and Pendimethalin EC | 8,40·10⁻² l/are (115 fl oz/acre) |
| B | Distinct, 8,41·10⁻³ kg/are (12 oz/acre) and Pendimethalin CS | 7,31·10⁻² l/are (100 fl oz/acre) |
| C | Distinct, 8,41·10⁻³ kg/are (12 oz/acre) | |
| D | Distinct, 5.60·10⁻³ kg/are (8 oz/acre) and Pendimethalin EC | 15,94·10⁻² l/are (218 fl oz/acre) |
| E | Distinct, 5,60·10⁻³ kg/are (8 oz/acre) and Pendimethalin CS | 13,37·10⁻² l/are (183 fl oz/acre) |
| F | Distinct, 5,60·10⁻³ kg/are (8 oz/acre) | |

The plants were rated at 7 days after treatment and post tassel. The results are set forth in Table 7 and show that the microcapsule CS composition caused less damage to the corn than the EC formulation.

**Table 7: Results of Safety Testing-Tank-mix Combination**

| Tank Mix | % Lean 7 DAT V3 | % Lean 7 DAT V6 | % Leaf Fusing Post Tassel |
|---|---|---|---|
| A | 3 | 52 | 16 |
| B | 3 | 35 | 0 |
| C | 3 | 38 | 0 |
| D | 3 | 36 | |
| E | 2 | 23 | |
| F | 1 | 29 | |

## Claims

1. A method for the preemergence control of undesirable plant species comprising applying as a tank mix to soil containing seeds of the undesirable plant a herbicidally effective amount of a microcapsule composition comprising a dinitroaniline compound, with a herbicide formulation comprising diflufenzopyr or dicamba or diflufenzopyr and dicamba.

2. The method of claim 1 wherein the microcapsule has a median diameter from 3 micrometers to 10 micrometers.

3. The method of claims 1 to 2 wherein the dinitroaniline compound is pendimethalin or trifluralin.

4. The method of claims 1 to 3 wherein the undesired plant is crabgrass.

5. A method for the control of undesirable plants in the presence of desirable crop plants which comprises applying to soil containing the desirable plants and seeds of the undesirable plant a herbicidally effective amount of a microcapsule composition comprising a dinitroaniline compound.

6. The method of claim 5 wherein the microcapsule has a median diameter from 3 micrometers to 10 micrometers.

7. The method of claims 5 to 6 wherein the dinitroaniline compound is pendimethalin or trifluralin.

8. The method of claims 5 to 7 wherein the undesired plant is crabgrass.

9. The method of claims 5 to 8 wherein the desired plant is lettuce, tomatoes or corn.

10. A method for safening a desirable crop from the effects of a herbicide applied to control undesirable plants in the presence of the desirable crop plants which comprises applying a herbicidally effective amount of a microcapsule composition comprising a dinitroaniline compound.

## Patentansprüche

1. Verfahren für die Vorauflaufbekämpfung von unerwünschten Pflanzenarten, bei dem man eine herbizidwirksame Menge einer Mikrokapselzusammensetzung, die eine Dinitroanilinverbindung umfaßt, zusammen mit einer Herbizidformulierung, die Diflufenzopyr oder Dicamba oder Diflufenzopyr und Dicamba umfaßt, als Tankmischung auf Erde, die Samen der unerwünschten Pflanze enthält, ausbringt.

2. Verfahren nach Anspruch 1, wobei die Mikrokapsel einen Mediandurchmesser von 3 Mikrometern bis 10 Mikrometer aufweist.

3. Verfahren nach den Ansprüchen 1 bis 2, wobei es sich bei der Dinitroanilinverbindung um Pendimethalin oder Trifluralin handelt.

4. Verfahren nach den Ansprüchen 1 bis 3, wobei es sich bei der unerwünschten Pflanze um Fingerhirse handelt.

5. Verfahren zur Bekämpfung von unerwünschten Pflanzen in Gegenwart von erwünschten Kulturpflanzen, bei dem man eine herbizidwirksame Menge einer Mikrokapselzusammensetzung, die eine Dinitroanilinverbindung umfaßt, auf Erde, die die erwünschten Pflanzen sowie Samen der unerwünschten Pflanze enthält, ausbringt.

6. Verfahren nach Anspruch 5, wobei die Mikrokapsel einen Mediandurchmesser von 3 Mikrometern bis 10 Mikrometer aufweist.

7. Verfahren nach den Ansprüchen 5 bis 6, wobei es sich bei der Dinitroanilinverbindung um Pendimethalin oder Trifluralin handelt.

8. Verfahren nach den Ansprüchen 5 bis 7, wobei es sich bei der unerwünschten Pflanze um Fingerhirse handelt.

9. Verfahren nach den Ansprüchen 5 bis 8, wobei es sich bei der erwünschten Pflanze um Salat, Tomaten oder Mais handelt.

10. Verfahren für die Safener-Behandlung einer erwünschten Kultur gegen die Auswirkungen eines Herbizids, das für die Bekämpfung von unerwünschten Pflanzen in Gegenwart der erwünschten Kulturpflanzen ausgebracht wird, bei dem man eine herbizidwirksame Menge einer Mikrokapselzusammensetzung, die eine Dinitroanilinverbindung umfaßt ausbringt.

## Revendications

1. Procédé de contrôle de préémergence d'espèces végétales indésirables, comprenant l'application, en tant que mélange prêt à l'emploi, sur un sol contenant des semences du végétal indésirable, d'une quantité efficacement herbicide d'une composition en microcapsules comprenant un composé de dinitroaniline, avec une formulation herbicide comprenant du diflufenzopyr ou du dicamba ou du diflufenzopyr et du dicamba.

2. Procédé selon la revendication 1, dans lequel la microcapsule possède un diamètre médian de 3 micromètres à 10 micromètres.

3. Procédé selon les revendications 1 à 2, dans lequel le composé de dinitroaniline est de la pendiméthaline ou de la trifluraline.

4. Procédé selon les revendications 1 à 3, dans lequel le végétal indésiré est de la digitaire.

5. Procédé pour le contrôle de végétaux indésirables en présence de plantes de culture souhaitables, comprenant l'application, sur un sol contenant les plantes souhaitables et les semences du végétal indésirable, d'une quantité efficacement herbicide d'une composition en microcapsules comprenant un composé de dinitroaniline.

6. Procédé selon la revendication 5, dans lequel la microcapsule possède un diamètre médian de 3 micromètres à 10 micromètres.

7. Procédé selon les revendications 5 à 6, dans lequel le composé de dinitroaniline est de la pendiméthaline ou de la trifuraline.

8. Procédé selon les revendications 5 à 7, dans lequel le végétal indésiré est de la digitaire.

9. Procédé selon les revendications 5 à 8, dans lequel les plantes souhaitées sont des laitues, des tomates ou du maïs.

10. Procédé pour protéger une culture souhaitable des effets d'un herbicide appliqué pour contrôler des végétaux indésirables en présence des plantes de culture souhaitables, comprenant l'application d'une quantité efficacement herbicide d'une composition en microcapsules contenant un composé de dinitroaniline.
